# EUROPEAN PATENT APPLICATION

(11) **EP 3 348 449 A1**
(43) Date of publication of application: **18.07.2018**
(21) Application number: 17151033.2
(22) Date of filing: 11.01.2017
(51) Int. Cl.: B62B 3/00

(54) **MODULAR SYSTEM**

(71) Applicant: EXPISCOR AB, 242 94 Hörby (SE)
(72) Inventor: Andersson, Per O, 242 94 HÖRBY (SE)
(74) Representative: AWA Sweden AB

(57) **Abstract**

The present invention relates to a modular system comprising at least one functional frame (1) comprising a first end, a second end located opposite said first end, at least two lateral bodies (3) and at least two transversal bodies (5), wherein said at least two lateral bodies (3) are connected to said at least two transversal bodies (5), wherein said at least two lateral bodies (3) and said at least two transversal bodies (5) collectively defines at least X openings, each one of said at least X openings being arranged to receive a functional unit of a predefined size, wherein said modular system is arrangeable in at least Y number of configurations chosen from the following three configurations: a load bearing configuration, a transporting configuration, and a functional configuration, wherein both X and Y are integers greater than 0 and the sum of X and Y is greater than 2.

## Description

### Field of the Invention

The present invention relates to a modular system comprising at least one first functional frame, wherein said modular system is arrangeable in at least one configuration chosen from the following three configurations: a load bearing configuration, a transporting configuration, and a functional configuration.

### Background

Since ages past, a wheelbarrow or a cart has been a common tool for transporting goods short distances using manual labor. Using a wheelbarrow is easy and allows a user to transport much heavier and bulkier goods than what would otherwise have been possible. When the wheelbarrow is not used, it is often stored in a storage shed or similar, thus being of no use and creating no value.

Similarly, a common method of preparing goods or working on a workpiece is to place it upon an elevated surface designed to assist in the crafting, repairing, or preparing operations to be done on the goods or workpiece. For example, when shaping a piece of wood into a finished product, a specially designed table, i.e. a workbench, may be used. A workbench may comprise features which simplifies the preparation of the workpiece. When the workbench is not used, it is of no use and creates no value.

When storing goods, finished products, crops that have been cleaned and prepared, etc., it is often beneficial to utilize a multilevel storage solution such as a shelf. This often makes the storage of goods more space efficient. If a shelf is not used for its intended purpose, i.e. storing goods, it creates no value.

Thus, a problem identified by the inventor is how to more efficiently utilize embedded energy and material while providing the benefits of commonly available products such as wheelbarrows, workbenches, and shelfs. Another problem identified by the inventor is how to increase the total net value created by a set amount of construction material during the lifetime of the material.

### Summary of the Invention

An object of the present invention is therefore to alleviate the abovementioned problems and provide a modular system which combines the benefits of the abovementioned products, and is arranged such that its utilization ratio is increased compared to said commonly available products.

The inventor has further realized that arranging the modular system so that it can receive functional units of a predetermined size enables a user to easily adapt and customize the system to fit his/her current needs. For example, a wheelbarrow-type configuration of the modular system (herein referred to as a transporting configuration) may be provided with removable Euro containers to transport crops or similar goods, or be provided with a flat surface to transport larger products that would not fit into a Euro container. Similarly, a workbench-type configuration (herein referred to as a functional configuration) may be provided with a flat surface to hold blueprints or similar and/or a surface specifically adapted to simplify the preparation of the workpiece.

The above and other objects which will be evident from the following description are achieved by a modular system according to the present invention.

According to a first aspect of the present invention, a modular system is provided, said modular system comprising at least one first functional frame comprising a first end, a second end located opposite said first end, at least two lateral bodies and at least two transversal bodies, wherein said at least two lateral bodies are connected to said at least two transversal bodies, wherein said at least two lateral bodies and said at least two transversal bodies collectively defines at least X openings, each one of said at least X openings being arranged to receive a functional unit of a pre-defined size, wherein said modular system is arrangeable in at least Y number of configurations chosen from the following three configurations: a load bearing configuration, a transporting configuration, and a functional configuration, wherein both X and Y are integers greater than 0 and the sum of X and Y is greater than 2,
wherein in said load bearing configuration:
said modular system further comprises two additional functional frames each comprising a first end, a second end located opposite said first end, at least two lateral bodies and at least two transversal bodies, wherein said at least two lateral bodies of said additional functional frames are connected to said at least two transversal bodies of said additional functional frames, wherein said at least two lateral bodies of said additional functional frames and said at least two transversal bodies of said additional functional frames collectively defines at least X openings, and said modular system is arranged so that: at least one first functional frame of said modular system is arranged so that said transversal bodies and said lateral bodies are parallel with a horizontal plane, said two additional functional frames are arranged so that said transversal bodies are parallel with a horizontal plane and said lateral bodies are parallel with a vertical plane, and each one of said first end and said second end of said at least one first functional frame of said modular system is connected to a respective one of said two additional functional frames,
wherein in said transporting configuration:
said modular system further comprises at least one wheel, and said modular system is arranged so that: said first end of said at least one first functional frame is connectable to said at least one wheel, and
wherein in said functional configuration:
said modular system further comprises means for distancing said at least one first functional frame from the ground, and said modular system is arranged so that: said at least one first functional frame of said modular system is arrangeable so that said transversal bodies and said lateral bodies are parallel with a horizontal plane, and said at least one first functional frame is connectable to said means for distancing said at least one first functional frame from the ground.

A horizontal plane is to be understood as being a plane that is perpendicular to the gravitational direction, and a vertical plane is a plane that is perpendicular to a horizontal plane. It should be understood that the at least one opening being arranged to receive a functional unit means that the opening is arranged so that a functional unit placed therein is prevented from moving in a geometric plane that is parallel with the lateral and transversal bodies, as well as prevented from moving all the way through the opening. In other words, a functional unit can be placed in an opening in such a way that the lateral and transversal bodies defining the opening keep the functional unit in place and keep it from falling through the opening. Thus, a user can combine the modular system with functional units in an easy and convenient way.

The load bearing configuration which the modular system may be arrangeable in is to be understood as being a configuration in which a shelf-like structure comprising the abovementioned openings has been achieved by the combination of at least three functional frames, two of which are arranged in a substantially vertical orientation and at least one of which is arranged in a substantially horizontal orientation, wherein either end of the horizontally oriented first functional frame is connected to a respective vertically oriented functional frame. Thus, a load bearing unit or storage unit is achieved, capable of storing functional units as well as items placed in or on the functional units.

According to one exemplary embodiment of the present invention, the modular system is arrangeable in a load bearing configuration, wherein in the load bearing configuration, the modular system comprises at least four functional frames, wherein two of the four functional frames are arrangeable so that the transversal bodies and the lateral bodies are parallel with a horizontal plane, and each one of the first end and the second end of the two horizontally arrangeable first functional frames is connected to a respective one of the other two functional frames at different heights. Thus, a more efficient load bearing unit or storage unit is achieved as more functional units can be stored upon the modular system in the load bearing configuration as two first functional frames can be arranged above one another in a horizontal orientation.

According to one exemplary embodiment of the present invention, the at least one opening is arranged to receive and hold a functional unit of a predetermined size. Thus, a functional unit is held in place, preventing it from sliding off the first functional frame and a more secure and stable solution for holding functional units is thereby achieved.

According to one exemplary embodiment, Y is 2. In other words, the modular system may be arrangeable in at least two of the abovementioned configurations. Thus, a more functional system is achieved, i.e. the modular system can be used in a greater variety of situations and be used to satisfy a greater variety of needs than previously. With this solution, there is no need for a user to have two separate units to solve two separate needs, e.g. storing and transporting goods, storing and providing a work bench, or transporting goods and providing a work bench, as long as these two needs do not occur at the same time. Thus, the environmental impact due to the overproduction of goods and wares is decreased as fewer unique units, devices or arrangements are needed to solve a number of problems. This also increases cost efficiency. According to one exemplary embodiment, Y is 3. In other words, the modular system may be arrangeable in three of the abovementioned configurations. The modular system may be further arrangeable in configurations other than those listed above. Thus, an even more functional and environmentally friendly system may be achieved.

The modular system may be arrangeable in Y number of configurations, and said at least two lateral bodies and said at least two transversal bodies may collectively define X number of openings so that the sum of the two is anywhere between 2 - 8. For example, the modular system may be arrangeable in three configurations and the lateral and transversal bodies of the first functional frame may define three openings. By providing the first functional frame with more than one opening, a more usable arrangement is achieved.

According to one exemplary embodiment, said at least one first functional frame comprises handles located adjacent to said second end. Having the modular system comprise handles allows a user to use these e.g. when the modular system is in a transporting configuration, thus increasing the ease of handling and the usability of the modular system. A user of the modular system may also find that the handles simplifies the transition between configurations of the modular system.

According to one exemplary embodiment of the present invention, the at least two lateral bodies extend beyond each one of the at least two transversal bodies. By having the lateral bodies extend beyond the transversal bodies, a first functional frame is achieved wherein the end portions of the lateral bodies can function as handles. The end portions may alternatively be used as connection points for at least one wheel when the modular system is in a transporting mode and/or for connecting to the at least two vertically oriented functional frames when the modular system is in a load bearing arrangement. A first transversal body of the at least two transversal bodies may be connected to an end portion of the lateral bodies and a second transversal body of the at least two transversal bodies may be connected to the lateral bodies so that a portion of the lateral bodies extend beyond the second transversal body in a direction away from the end portion of the lateral bodies, wherein the second transversal body is the transversal body that is most distal to the first transversal body. Thus, handles are provided at one end of the first functional frame.

The modular system may be arranged to be connectable to handles at a location that is adjacent to the second end. Thus, a more usable system is achieved where handles can be connected to the first functional frame when the system is to be used in a transporting configuration, thereby improving the ease of use and ease of handling of the system, and where the handles can be omitted when the system is to be used in a load bearing configuration, wherein there is no need for providing the first functional frame with handles.

According to one exemplary embodiment, said pre-defined size may for example be 300 mm by 200 mm, 400 mm by 300 mm, 600 mm by 400 mm, or 800 mm by 600 mm. Thus, the first functional frame is arranged to receive for example a Euro container having the nominal measurements 400 mm by 600 mm, or any of the other abovementioned measurements. Nominal measurements are to be understood as being the dimensions a functional unit is listed or marketed as having, but from which dimensions there may be slight deviations in accordance with standard production tolerances. Thereby, the modular system can easily be used with commonly available functional units such as Euro containers, as these have standardized measurements. Also, as Euro containers have standardized measurements that are multiples of 300 mm by 200 mm, each opening in the first functional frame may be used to receive a plurality of functional units, e.g. Euro containers, having nominal dimensions that are a fraction of that of the opening. E.g., an opening which is arranged to receive functional units that are 600 mm by 400 mm may be used to receive two functional units each having the nominal dimensions 300 mm by 400 mm. Thus, by keeping to widely accepted standardized measurements, a more functional and usable modular system is achieved.

According to one exemplary embodiment, in said load bearing configuration, said modular system may further comprise a cross-brace connecting said at least one first functional frame to said two additional functional frames. Thus, a more stable construction is achieved. Also, having cross-braces allow for a stabilizing solution which is easy to remove when the modular system is to be arranged in another configuration than in the load bearing configuration.

According to one exemplary embodiment, in said transporting configuration, said modular system may further comprise at least two wheels, and said first end of said at least one first functional frame is connected to said at least two wheels. Thus, a more stable arrangement is achieved. Also, having at least two wheels allow for a better load bearing capacity of the first functional frame when in the transporting configuration.

According to one exemplary embodiment, in said functional configuration, said means for distancing said at least one first functional frame from the ground may be a plurality of legs connectable to said at least one first functional frame. By having a plurality of legs, a more stable construction is achieved.

According to one exemplary embodiment, said plurality of legs are four legs.

According to one exemplary embodiment, said plurality of legs are four legs, wherein each pair of legs are arranged in an X-shape. Thereby, a more stable configuration may be achieved.

According to one exemplary embodiment, said plurality of legs are arranged in a vertical manner, so that they extend from the first functional frame and to the ground in a direction that is parallel with the gravitational direction.

According to one exemplary embodiment, said plurality of legs are connected to said at least one first functional frame in a foldable manner. Specifically, said legs may be connected to the first functional frames by means of hinges, so that the legs are foldable. Having the plurality of legs connected to said at least one first functional frame in a foldable manner is possible both in the exemplary embodiment with pairs of legs arranged in X-shapes as well as in the exemplary embodiment with the plurality of legs being arranged in a vertical manner. Thereby, the first functional frame may first be used in a functional configuration, wherein the first functional frame is distanced from the ground by means of said foldable legs, after which the first functional frame is used in e.g. a transporting configuration, in which the foldable legs are folded so that they do not impede the use of the first functional frame in a transporting configuration. The first functional frame may comprise the foldable legs in all of the configurations in which it may be arranged.

Said functional unit may be chosen from a group comprising: a Euro container, a multifunction table unit, and a flat surface. A multifunction table unit is to be understood as being a surface provided with features, e.g. recesses, holes and slits, arranged to assist a user of the multifunctional table unit in a number of crafting, woodworking, tinkering or handicraft operations. Examples of such features are through holes that can be used to fasten a workpiece to the multifunctional table unit, or a number of recesses provided at different angles that may be used to align a workpiece with a cutting tool or to align a cutting tool with a workpiece. Thus, a user of the modular system in the functional configuration may use a Euro container in one of the openings of the first functional frame to store his/her tools, while a flat surface arranged in another opening may be used to hold blueprints or technical drawings, while a multifunctional table unit may be used in combination with e.g. clamping tools to hold a workpiece in place. Said functional unit may also be an adapter arranged to allow other functional units having smaller dimensions than the openings are arranged to receive and/or hold to be received and/or held by the openings. In other words, an opening being arranged to receive and/or hold a functional unit having the nominal measurements 300 mm by 200 mm may be provided with an adapter that decreases the size of the opening so as to adapt it to receive and/or hold functional units having nominal measurements of e.g. 150 mm by 100 mm, or any other measurements. Thus, the usability of the modular system is increased.

According to one exemplary embodiment, said at least one first functional frame is made of wood. Thus, an environmentally friendly product made from renewable materials may be provided. Furthermore, a functional frame made of wood has been shown to exhibit good structural properties, such as good strength and stability. According to one exemplary embodiment, all functional frames of the modular systems are made of wood.

According to one exemplary embodiment, the first functional frame may be made of a polymer, e.g. a bio-based plastic. Thus, an environmentally friendly and lightweight product may be provided.

Said at least two lateral bodies and said at least two transversal bodies may collectively define at least two openings. By having two openings, the number of functional units that the first functional frames can receive is increased as compared to a first functional frame comprising one opening, thus increasing the usability of the modular system.

Said at least two lateral bodies and said at least two transversal bodies may collectively define at least three openings. By having three openings, the number of functional units that the first functional frames can receive is increased as compared to a first functional frame comprising one or two openings, thus increasing the usability of the modular system.

Said at least two lateral bodies and said at least two transversal bodies may collectively define at least four openings. By having four openings, the number of functional units that the first functional frames can receive is increased as compared to a first functional frame comprising one, two or three openings, thus increasing the usability of the modular system.

The first functional frame may for example comprise two lateral bodies and five transversal bodies, thereby defining four openings. By having five openings, the number of functional units that the first functional frames can receive is increased as compared to a first functional frame comprising one, two, three or four openings, thus increasing the usability of the modular system.

The first functional frame may comprise three lateral bodies and three transversal bodies, wherein each transversal body extends across each of the lateral bodies. Thus, four openings are defined in a 2 by 2 matrix.

### Brief description of the drawings

The above, as well as additional objects, features and advantages of the present invention, will be better understood through the following illustrative and non-limiting detailed description of exemplary embodiments of the present invention, with reference to the appended drawing, wherein:
Figure 1A is a perspective view of a first functional frame according to one exemplary embodiment of the present invention,
Figure 1B is a perspective view of a first functional frame according to one exemplary embodiment of the present invention,
Figure 1C is a perspective view of a first functional frame according to one exemplary embodiment of the present invention,
Figure 1D is a perspective view of a first functional frame according to one exemplary embodiment of the present invention,
Figure 2A is a perspective view of a modular system comprising the first functional frame of Figure 1A, wherein the modular system is arranged in a functional configuration,
Figure 2B is a perspective view of a modular system comprising the first functional frame of Figure 1C, wherein the modular system is arranged in a functional configuration,
Figure 3A is a perspective view of a modular system comprising the first functional frame of Figure 1A, wherein the modular system is arranged in a transporting configuration,
Figure 3B is a perspective view of a modular system comprising a first functional frame according to one exemplary embodiment of the present invention, wherein the modular system is arranged in a transporting configuration,
Figure 3C is a perspective view of a modular system comprising the first functional frame of Figure 1C, wherein the modular system is arranged in a transporting configuration,
Figure 4A is a perspective view of a modular system comprising the first functional frame of Figure 1B, wherein the modular system is arranged in a transporting configuration according to one exemplary embodiment of the present invention,
Figure 4B is a perspective view of a modular system comprising the first functional frame of Figure 1D, wherein the modular system is arranged in a transporting configuration according to one exemplary embodiment of the present invention,
Figure 5A is a perspective view of a modular system comprising a plurality of functional frames according to one exemplary embodiment of the present invention, wherein the modular system is arranged in a load bearing configuration,
Figure 5B is a perspective view of a modular system comprising a plurality of functional frames according to one exemplary embodiment of the present invention, wherein the modular system is arranged in a load bearing configuration,
Figure 6 is a cross-sectional view of a functional frame and a functional unit placed therein.

### Detailed description of the drawings

In the present detailed description, embodiments of a modular system according to the present invention are mainly discussed with reference to drawings showing a modular system with components and portions being relevant in relation to various embodiments of the invention. It should be noted that this by no means limits the scope of the invention, which is also applicable in other circumstances for instance with other types or variants of modular systems than the embodiments shown in the appended drawings. Further, that specific features are mentioned in connection to an embodiment of the invention does not mean that those components cannot be used to an advantage together with other embodiments of the invention.

The invention will now by way of example be described in more detail by means of embodiments and with reference to the accompanying drawings.

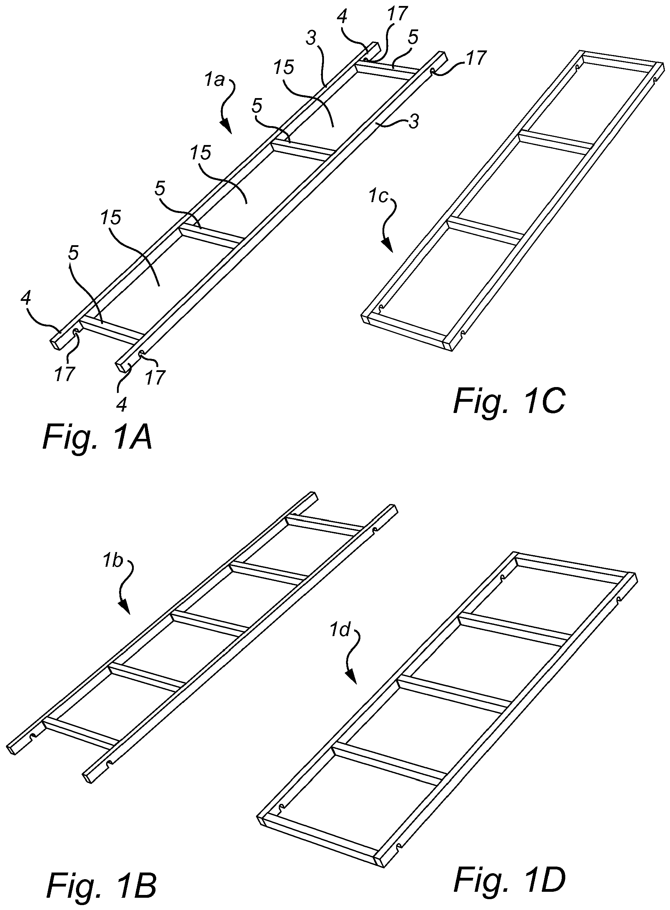

Figure 1A is a perspective view of a first functional frame 1a according to one exemplary embodiment of the present invention. The first functional frame 1 a comprises two lateral bodies 3 and four transversal bodies 5. The transversal bodies 5 are connected to the two lateral bodies 3 such that the first functional frame 1 a has the shape of a ladder. Between every pair of adjacent transversal bodies 5, an opening 15 is provided, i.e. the first functional frame 1 a of Fig. 1A is provided with three openings 15 adapted to receive a functional unit (not shown in Figs. 1A-1D). The transversal bodies 5 are perpendicular to the two lateral bodies 3 and the openings 15 are therefore rectangular. The transversal bodies 5 are connected to the two lateral bodies 3 by rigid connection techniques, and they are not arranged to be readily removable from each other. Thus, increased stability is achieved. Each one of the three openings 15 are of the same shape as the other two. Thus, a functional unit placed in one opening may just as well be placed in any of the other two openings. The two lateral bodies 3 extend beyond the two most distal transversal bodies 5. Thus, the portion of the two lateral bodies 3 that extend beyond the two most distal transversal bodies 5 may be used as handles in certain configurations of the modular system. Most distal is to be understood as meaning the two transversal bodies 5 that are located at the greatest distance from each other out of the four transversal bodies 5 comprised by the first functional frame 1 a. Thus, each one of the two lateral bodies 3 have two end portions 4 that protrude beyond the transversal bodies 5 at either end of the lateral bodies 3. At either end portion 4 of the two lateral bodies 3 there is provided a small recess 17 for allowing another component, e.g. a set of wheels, handles or a pair of legs, to be connected thereto.

Figure 1B is a perspective view of a first functional frame 1 b according to one exemplary embodiment of the present invention. The first functional frame 1 b comprises five transversal bodies 5 instead of four, as the first functional frame 1 a of Fig. 1A does. Consequently, the first functional frame 1 b comprises four openings 15, while the first functional frame 1 a of Fig. 1A comprises three openings 15. Otherwise, the first functional frame 1 b shares the same features as the first functional frame 1 a of Fig. 1A. Figure 1C is a perspective view of a first functional frame 1 c according to one exemplary embodiment of the present invention. The first functional frame 1 c comprises four transversal bodies 5, and consequently comprises three openings 15. The two most distal transversal bodies 5 are connected to a respective end of the two lateral bodies 3, such that no protruding end portion is provided. Figure 1D is a perspective view of a first functional frame 1 d according to one exemplary embodiment of the present invention. The first functional frame 1d comprises five transversal bodies 5 instead of four, as the first functional frame 1 c of Fig. 1C does. Consequently, the first functional frame 1 d comprises four openings 15, while the first functional frame 1 c of Fig. 1C comprises three openings 15. Otherwise, the first functional frame 1d shares the same features as the first functional frame 1 c of Fig. 1C.

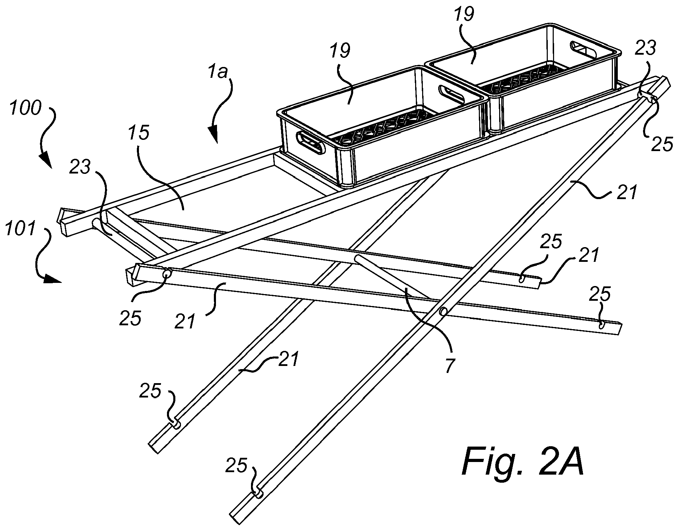

Figure 2A is a perspective view of a modular system 100 comprising the first functional frame 1a of Fig. 1A, wherein the modular system 100 is arranged in a functional configuration 101. When arranged in a functional configuration 101, the modular system 100 is provided in the shape of a table having a plurality of openings 15 in which functional units may or may not be provided. In Fig. 2A, two of the three openings 15 are provided with Euro containers 19, so that a user may store e.g. produce or tools therein. In the functional configuration 101, the modular system 100 comprises four legs 21 that are connected to the first functional frame 1 a. The legs 21 are connected to the first functional frame 1 a by means of a connecting rod 23 that goes through the recesses 17 provided at either end of the two lateral bodies 3 of the first functional frame 1 a. Each end of the first functional frame 1 a is thus provided with a pair of legs 21. The four legs 21 are arranged in a X-shape, with each one of the two pairs of legs 21 extending in parallel from either end of the first functional frame 1 a and crossing the other pair of legs 21 at a position approximately halfway to the ground from the first functional frame 1 a. At the position where the legs 21 cross, a reinforcement rod 7 is provided. This reinforcement rod 7 is arranged so that it prevents the legs 21 from collapsing under the weight of the first functional frame 1 a. Each of the four legs 21 is provided with a recess 25 at either end. In the recess 25 arranged at one end, the connecting rod 23 is provided. At the recess 25 that is arranged at the other end of the legs 21, wheels or other components such as means for securing the modular system 100 to the ground can be connected.

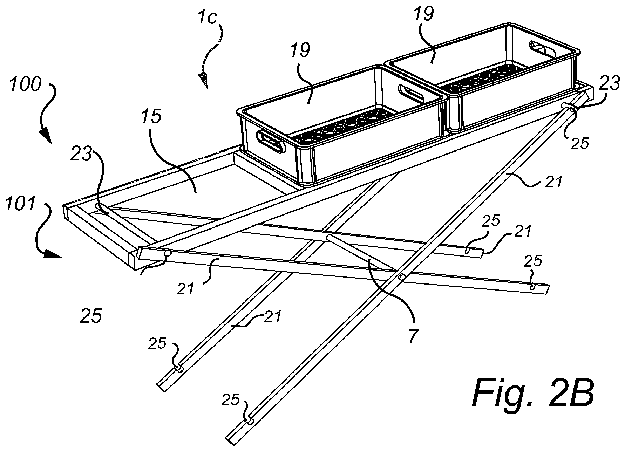

Figure 2B is a perspective view of a modular system 100 comprising the first functional frame 1 c of Fig. 1C, wherein said modular system 100 is arranged in a functional configuration 101. The modular system 100 of Fig. 2B comprises all the features described in relation to the modular system 100 of Fig. 2A, with the exception of the first functional frame 1 c being different from the first functional frame 1 a of Fig. 2A.

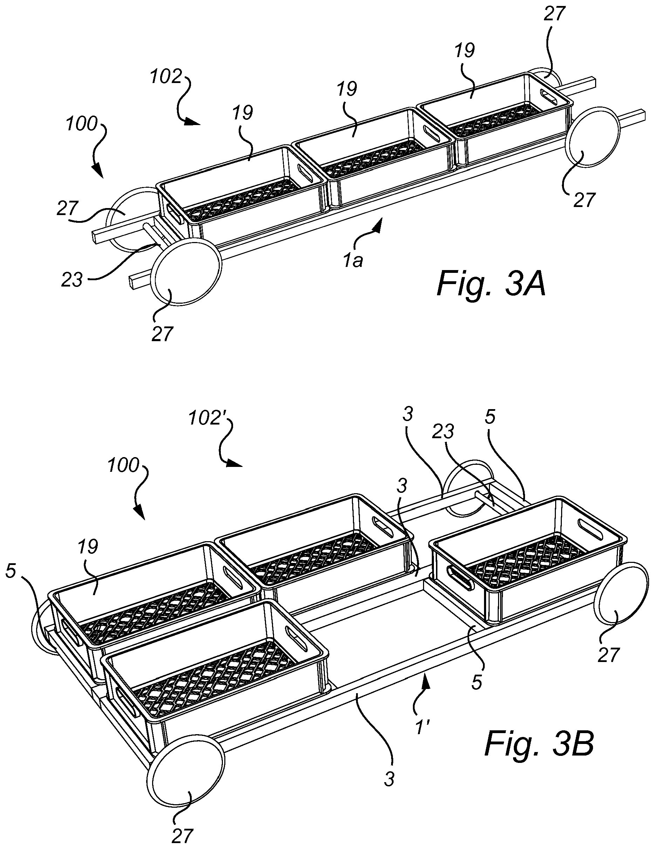

Figure 3A is a perspective view of a modular system 100 comprising the first functional frame 1a of Fig. 1A, wherein the modular system 100 is arranged in a transporting configuration 102. In the transporting configuration 102, the first functional frame 1 a is provided with two connecting rods 23 arranged in a respective recess 17 provided at either end of the first functional frame 1 a. Each one of the two connecting rods 23 are connected to two wheels 27, thus allowing the first functional frame 1 a to roll on the ground.

Figure 3B is a perspective view of a modular system 100 comprising a first functional frame 1' according to one exemplary embodiment of the present invention, wherein the modular system is arranged in a transporting configuration 102'. The first functional frame 1' comprises three lateral bodies 3, and four transversal bodies 5. Two of the three lateral bodies 3 are connected to a respective end of each of the four transversal bodies 5. The third lateral body 3 is connected to a midpoint of each one of the four transversal bodies 5. Thus, the first functional frame 1' comprises six openings 15 arranged in a 2 by 3 matrix. At either end of the first functional frame 1', a connecting rod 23 is provided which is connected to a pair of wheels 27. The connecting rod 23 is arranged in a respective recess 17 provided at each end of each one of the three lateral bodies 3 and extends through all three lateral bodies 23. Thus, the modular system 100 in the configuration shown here comprises four wheels 27 and six openings 15 arranged to receive and/or hold a functional unit, e.g. a Euro container 19.

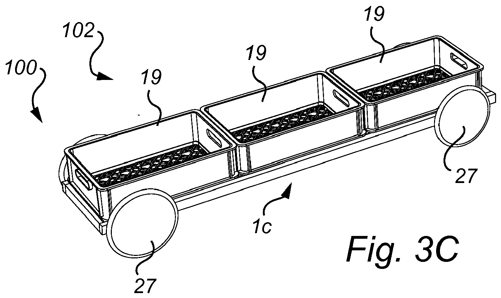

Figure 3C is a perspective view of a modular system 100 comprising the first functional frame 1 c of Fig. 1C, wherein the modular system 100 is arranged in a transporting configuration 102. The modular system 100 of Fig. 3C comprises all the features described in relation to the modular system 100 of Fig. 3A, with the exception of the first functional frame 1 c being different from the first functional frame 1 a of Fig. 3A.

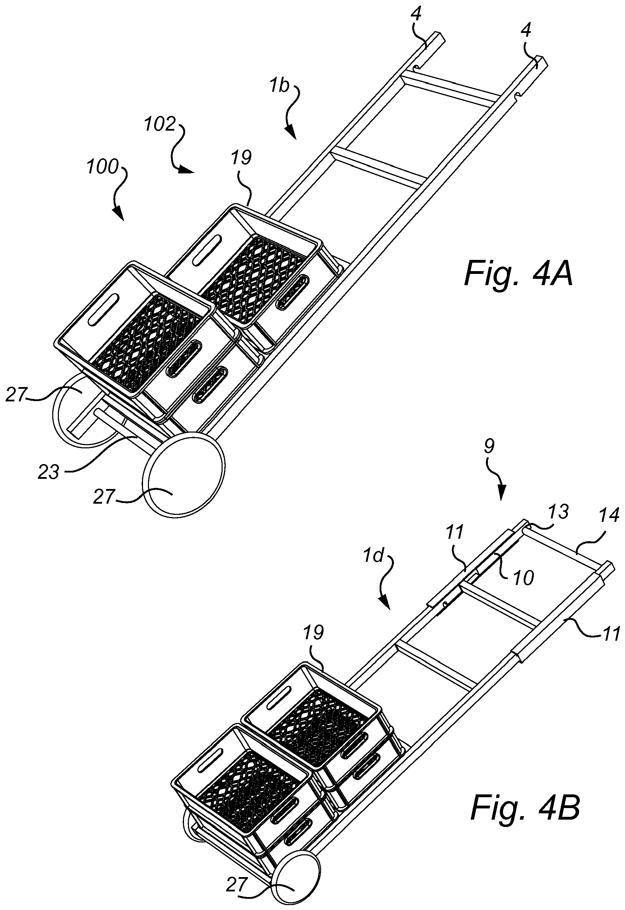

Figure 4A is a perspective view of a modular system 100 comprising the first functional frame 1 b of Fig. 1B, wherein the modular system 100 is arranged in a transporting configuration 102. The first functional frame 1 b is provided with one connecting rod 23 arranged in a recess 17 at one end of the first functional frame 1 b. The connecting rod 23 is connected to two wheels 27. Thus, a user can grab the protruding end portions 4 and use the modular system 100 to transport goods in a cart-like or wheelbarrow-like manner. Such goods may for example be held in Euro containers 19 placed in the openings 15.

Figure 4B is a perspective view of a modular system 100 comprising the first functional frame 1 d of Fig. 1D, wherein the modular system 100 is arranged in a transporting configuration 102 according to one exemplary embodiment of the present invention. Similar to the modular system 100 of Fig. 4A, the first functional frame 1 d is provided with one connecting rod 23 which is connected to a pair of wheels 27. However, as the first functional frame 1d lacks protruding end portions 4, it has instead been provided with a handle 9 that is connected to the end of the first functional frame 1 d that is not provided with the wheels 27. The handle 9 comprises two U-beams 11 which are connected to a respective one of the two lateral bodies 3. The connection may be by friction fit, or it may be facilitated through connection means or fasteners (not shown). Furthermore, the handle 9 comprises a grip portion 13 which is connected to the two lateral bodies 3 by means of the U-beams 11. The grip portion 13 comprises two lateral portions 10 that are arranged to be fitted inside the U-beams 11, and a gripable portion 14 connecting the two lateral portions 10. The lateral portions 10 are parallel with the lateral bodies 3 of the first functional frame 1 d and the gripable portion 14 is perpendicular to the two lateral portions 10.

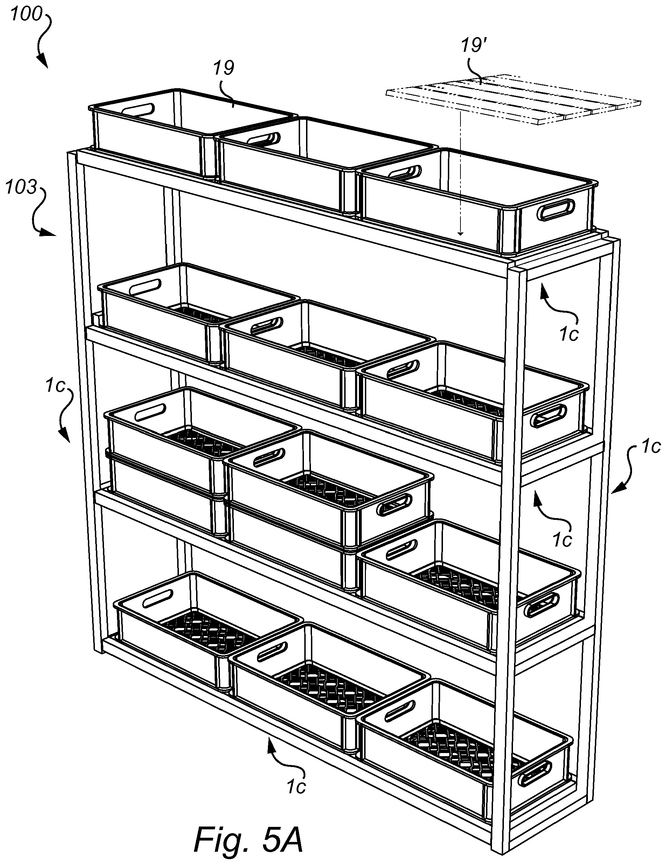

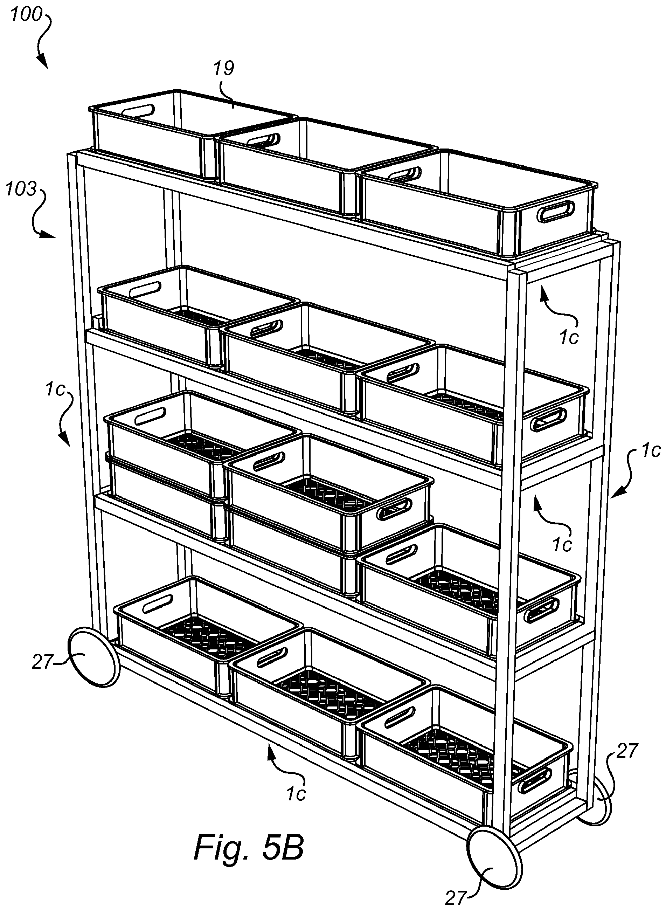

Figure 5A is a perspective view of a modular system 100 comprising six functional frames 1 c of Fig. 1C, wherein the modular system 100 is arranged in a load bearing configuration 103. The load bearing configuration 103 can be seen as the functional frames 1 c being arranged in a bookshelf-like structure. Two of the six functional frames 1 c are vertically aligned and arranged in geometrical planes that are parallel with each other. The other four of the six functional frames 1 c are horizontally aligned and arranged in geometrical planes that are parallel with each other. Each one of the four horizontally aligned functional frames 1 c form a shelf in the load bearing configuration 103, while the two vertically aligned functional frames 1 c form the side walls of the load bearing configuration 103. Either end of each one of the horizontally aligned functional frames 1 c is connected to a respective one of the transversal bodies 5 of the vertically aligned functional frames 1c. Thus, a bookshelf-like structure with four vertically offset shelfs is achieved, each shelf being made up of a functional frame 1 c. Fig. 5A also shows another type of functional unit than the Euro container 19, namely a flat storage surface 19'. Figure 5B shows a modular system 100 that is identical to that of Fig. 5A, except from the fact that the modular system 100 of Fig. 5B comprises four wheels 27 connected to a lower end of the two vertically oriented functional frames 1 c.

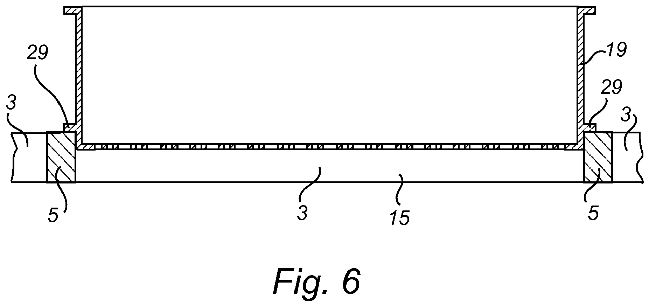

Figure 6 is a cross-sectional view of a functional frame 1 a, 1 b, 1 c, 1 d and a Euro container 19 placed therein. The Euro container 19 is placed inside one of the openings 15 of the functional frame 1 a, 1 b, 1 c, 1d, and is prevented from passing through the opening by means of a protruding ridge 29 provided around the Euro container 19. Thus, the Euro container 19 is prevented from moving from side to side as it has been partially fitted inside the opening 15, while it is also prevented from passing all the way through the opening 15 due to the protruding ridge 29 which abuts the transversal bodies 5 and the lateral bodies 3 of the functional frame 1 a, 1 b, 1 c, 1 d.

As shown above, one and the same functional frame may be used in any number of the abovementioned configurations, thus allowing a user to satisfy a number of needs using one and the same functional frame. In addition to the configurations described above, other configurations are also possible. For example, the functional frame of Fig. 1A is shown in the functional configuration (Fig. 2A) and in the transporting configuration (Fig. 3A). However, the functional frame of Fig. 1A may also be used in a load bearing configuration. Converesely, the functional frame of Fig. 1C, which is shown in the load bearing configuration in Fig. 5A, may also be configured in the trasporting configuration (Fig. 3C) and/or the functional configuration (Fig. 2B). For the sake of brevity, all possible combinations have not been described herein but are considered clearly understood by the skilled person given the description above.

The skilled person realizes that a number of modifications of the embodiments described herein are possible without departing from the scope of the invention, which is defined in the appended claims. Furthermore, any reference signs in the claims should not be construed as limiting the scope.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

## Claims

1. A modular system comprising at least one first functional frame comprising a first end, a second end located opposite said first end, at least two lateral bodies and at least two transversal bodies,
wherein said at least two lateral bodies are connected to said at least two transversal bodies,
wherein said at least two lateral bodies and said at least two transversal bodies collectively defines at least X openings, each one of said at least X openings being arranged to receive a functional unit of a pre-defined size,
wherein said modular system is arrangeable in at least Y number of configurations chosen from the following three configurations: a load bearing configuration, a transporting configuration, and a functional configuration,
wherein both X and Y are integers greater than 0 and the sum of X and Y is greater than 2,
wherein in said load bearing configuration:
said modular system further comprises two additional functional frames each comprising a first end, a second end located opposite said first end, at least two lateral bodies and at least two transversal bodies,
wherein said at least two lateral bodies of said additional functional frames are connected to said at least two transversal bodies of said additional functional frames,
wherein said at least two lateral bodies of said additional functional frames and said at least two transversal bodies of said additional functional frames collectively defines at least X openings, and
said modular system is arranged so that:
said at least one first functional frame of said modular system is arranged so that said transversal bodies and said lateral bodies are parallel with a horizontal plane,
said two additional functional frames are arranged so that said transversal bodies are parallel with a horizontal plane and said lateral bodies are parallel with a vertical plane, and
each one of said first end and said second end of said at least one first functional frame of said modular system is connected to a respective one of said two additional functional frames,
wherein in said transporting configuration:
said modular system further comprises at least one wheel, and
said modular system is arranged so that:
said first end of said at least one first functional frame is connectable to said at least one wheel, and
wherein in said functional configuration:
said modular system further comprises means for distancing said at least one first functional frame from the ground, and
said modular system is arranged so that:
said at least one first functional frame of said modular system is arrangeable so that said transversal bodies and said lateral bodies are parallel with a horizontal plane, and
said at least one first functional frame is connectable to said means for distancing said at least one first functional frame from the ground.

2. A modular system according to claim 1, wherein Y is 2.

3. A modular system according to any one of the preceding claims, wherein Y is 3.

4. A modular system according to any one of the preceding claims, wherein said at least one first functional frame comprises handles located adjacent to said second end.

5. A modular system according to any one of the preceding claims, wherein said pre-defined size is 300 mm by 200 mm, 400 mm by 300 mm, 600 mm by 400 mm, or 800 mm by 600 mm.

6. A modular system according to any one of the preceding claims, wherein in said load bearing configuration, said modular system further comprises a cross-brace connecting said at least one first functional frame to said two additional functional frames.

7. A modular system according to any one of the preceding claims wherein in said transporting configuration, said modular system further comprises at least two wheels, and said first end of said at least one first functional frame is connected to said at least two wheels.

8. A modular system according to any one of the preceding claims wherein in said functional configuration, said means for distancing said at least one first functional frame from the ground are a plurality of legs connectable to said at least one first functional frame.

9. A modular system according to claim 8, wherein in said functional configuration, said plurality of legs are connected to said at least one first functional frame in a foldable manner.

10. A modular system according to any one of the preceding claims, wherein said functional unit is chosen from a group comprising: a Euro container, a multifunction table unit, and a flat surface.

11. A modular system according to any one of the preceding claims, wherein said at least one first functional frame is made of wood.

12. A modular system according to any one of the preceding claims, wherein said at least two lateral bodies and said at least two transversal bodies collectively defines at least two openings.

13. A modular system according to any one of the preceding claims, wherein said at least two lateral bodies and said at least two transversal bodies collectively defines at least three openings.

14. A modular system according to any one of the preceding claims, wherein said at least two lateral bodies and said at least two transversal bodies collectively defines at least four openings.
